(19) Europäisches Patentamt

European Patent Office

Office européen des brevets

(11) Veröffentlichungsnummer: **0 271 766 B1**

(12) **EUROPÄISCHE PATENTSCHRIFT**

(45) Veröffentlichungstag der Patentschrift: **04.03.92**

(21) Anmeldenummer: **87117783.8**

(22) Anmeldetag: **02.12.87**

(51) Int. Cl.5: **C08L 33/12**, C08L 35/06

Die Akte enthält technische Angaben, die nach dem Eingang der Anmeldung eingereicht wurden und die nicht in dieser Patentschrift enthalten sind.

(54) **Thermoplastische Formmassen.**

(30) Priorität: **13.12.86 DE 3642645**

(43) Veröffentlichungstag der Anmeldung:
**22.06.88 Patentblatt 88/25**

(45) Bekanntmachung des Hinweises auf die
Patenterteilung:
**04.03.92 Patentblatt 92/10**

(84) Benannte Vertragsstaaten:
**DE FR GB IT**

(56) Entgegenhaltungen:
**EP-A- 0 264 791**
**FR-A- 2 091 500**
**FR-A- 2 496 109**
**US-A- 4 402 902**

(73) Patentinhaber: **BAYER AG**

**W-5090 Leverkusen 1 Bayerwerk(DE)**

(72) Erfinder: **Leitz, Edgar, Dr.**
**Goethestrasse 63**
**W-4047 Dormagen(DE)**
Erfinder: **Jansen, Ulrich, Dr.**
**Stürzelbergerstrasse 50**
**W-4047 Dormagen 5(DE)**
Erfinder: **Kress, Hans-Jürgen, Dr. c/o Mobay Corporation**
**Plastics and Rubber Division Mobay Road**
**Pittsburgh, PA 15205(US)**
Erfinder: **Peters, Horst, Dr.**
**Winterberg 25**
**W-5090 Leverkusen 3(DE)**
Erfinder: **Schoeps, Jochen, Dr.**
**Windmühlenstrasse 126**
**W-4150 Krefeld(DE)**
Erfinder: **Morbitzer, Leo, Dr.**
**Rungestrasse 50**
**W-5000 Köln 80(DE)**

## Beschreibung

Gegenstand der Erfindung sind thermoplastische Formmassen, enthaltend:

a.
1-99 Gew.-Teile, bevorzugt

5-95 Gew.-Teile, besonders bevorzugt 10-90 Gew.-Teile eines thermoplastischen Copolymerisats aus 40-70 Gew.-Teilen, bevorzugt 50-60 Gew.-Teilen, besonders bevorzugt 55,5 Gew.-Teilen Methylmethacrylat, 20-50 Gew.-Teilen, bevorzugt 30-40 Gew.-Teilen, besonders bevorzugt 34,5 Gew.-Teilen α-Methylstyrol und 5-15 Gew.-Teilen, bevorzugt 7-13 Gew.-Teilen, besonders bevorzugt 10 Gew.-Teilen Acrylnitril,

b.
1-99 Gew.-Teilen, bevorzugt

5-95 Gew.-Teilen, besonders bevorzugt 10-90 Gew.-Teile eines statistischen, thermoplastischen Copolymerisats aus 70-95 Gew.-Teilen, vorzugsweise 78-90 Gew.-Teilen Styrol und 5-30 Gew.-Teilen, vorzugsweise 10-22 Gew.-Teilen Maleinsäureanhydrid.

Die erfindungsgemäßen Formmassen aus a. und b. sind "verträgliche" Mischungen, was sich durch das Auftreten nur eines einzigen Thermoplast-Verlustmodulmaximums bzw. eines einzigen Glaspunktes zeigt, dessen Lage durch die jeweiligen Zusammensetzungen der Mischungen aus a. und b. bestimmt wird.

Die Wärmeformbeständigkeit der erfindungsgemäßen Formmassen reicht von der der Kompente a. bis zu der der Komponente b. und kann durch Wahl des Mischungsverhältnisses beliebig eingestellt werden.

Die weitaus größte Zahl der Kunststoffe ist miteinander unverträglich. Es war daher überraschend, daß Mischungen aus den erfindungsgemäßen Komponenten a. und b. im erfindungsgemäßen Zusammensetzungsbereich vollständig mischbar sind.

Mischungen von Styrol/Maleinsäureanhydrid-Copolymerisaten mit bestimmten anderen Vinylcopolymeren sind bekannt.

DE-OS 1 950 599 beschreibt transparente Mischungen mit erhöhter Wärmeformbeständigkeit aus Styrol oder α-Methylstyrol/Maleinsäureanhydrid- und Styrol oder α-Methylstyrol/Acrylnitril- oder (Methacrylnitril)-Copolymerisaten.

DE-OS 2 024 940 beschreibt transparente Formmassen mit erhöhter Wärmeformbeständigkeit aus Styrol/Maleinsäureanhydrid-Copolymerisaten und Methylmethacrylat/Styrol/Alkylacrylat-Copolymerisaten.

DE-OS 2 229 129 beschreibt transparente, glasfaserverstärkte Formmassen aus Stryol/Maleinsäureanhydrid-Copolymerisaten und Methylmethacrylat/Styrol-Copolymerisaten.

DE-OS 3 332 327 beschreibt transparente, wärmeformbeständige, thermoplastische Formmassen aus Styrol/Maleinsäurenhydrid-Copolymerisaten und Styrol/Acrylnitril-Copolymerisaten, wobei das Acrylnitril/Maleinsäureanhydrid-Gewichtsverhältnis mit kleiner 1,45 und größer 0,7 angegeben wird.

US-PS 4 451 617 und US-PS 4 408 010 beschreiben wärmeformbeständige Formmassen aus Styrol/Maleinsäureanhydrid-Copolymerisaten und Styrol/Maleinimid-Copolymerisaten.

Die Copolymerisate (a.) sind bekannt und lassen sich durch radikalische Copolymerisation, insbesondere durch Emulsions-, Suspensions-, Lösungs- oder Massepolymerisation, herstellen. Die Copolymerisate (a.) besitzen Molekulargewichte $\overline{M}w$ zwischen 15 kg/mol und 200 kg/mol.

Die Copolymerisate (b.) sind ebenfalls bekannt. Sie sind statistisch aufgebaut und werden bevorzugt durch Masse-oder Lösungspolymerisation bei unvollständiger Umsetzung aus den entsprechenden Monomeren hergestellt. Copolymerisate (b.) besitzen Molekulargewichte $\overline{M}w$ zwischen 50 kg/mol und 300 kg/mol.

Die erfindungsgemäßen Formmassen aus den Komponenten a. und b. können bekannte Zusätze, wie Stabilisatoren, Pigmente, Fließhilfsmittel, Flammschutzmittel, Entformungsmittel und/oder Antistatika in den üblichen Mengen enthalten.

Die erfindungsgemäßen Formmassen aus den Komponenten a. und b. und gegebenenfalls weiteren bekannten Zusätzen, können hergestellt werden, indem man die Bestandteile in bekannter Weise vermischt und dann bei Temperaturen von 200 °C bis 300 °C in üblichen Vorrichtungen, wie Innenknetern, Extrudern oder Doppelwellenschnecken schmelzcompoundiert oder schmelzextrudiert. Man kann auch die Komponenten a. und b. in einem geeigneten organischen Lösungsmittel lösen und dann in dafür geeigneten Vorrichtungen eindampfen.

Gegenstand der vorliegenden Erfindung ist somit auch dieses Verfahren zur Herstellung von thermoplastischen Formmassen aus den Komponenten a. und b. und gegebenenfalls bekannten Zusätzen.

Die Formmassen der vorliegenden Erfindung können zur Herstellung von Formkörpern jeder Art,

EP 0 271 766 B1

insbesondere durch Spritzguß, verwendet werden. Beispiele für herstellbare Formkörper sind: Maschinengehäuse, Teile für den Automobilsektor und Bausektor und Bauteile für Elektrogeräte.

Formkörper können auch durch Tiefziehen aus Platten und Folien hergestellt werden.

Beispiele:

Eingesetzte Polymerisate

a1.

Thermoplastisches Copolymerisat aus 55,5 Gew.-Teilen Methylmethacrylat, 34,5 Gew.-Teilen $\alpha$-Methylstyrol und 10 Gew.-Teilen Acrylnitril mit einem L-Wert = 49, hergestellt durch Emulsionspolymerisation.

a2.

Thermoplastisches Copolymerisat aus 55 Gew.-Teilen Methylmethacrylat, 25 Gew.-Teilen $\alpha$-Methylstyrol und 20 Gew.-Teilen Acrylnitril, mit einem L-Wert = 44, hergestellt durch Emulsionspolymerisation.

a3.

Thermoplastisches Copolymerisat aus 45 Gew.-Teilen Methylmethacrylat, 35 Gew.-Teilen $\alpha$-Methylstyrol und 20 Gew.-Teilen Acrylnitril, mit einem L-Wert = 45, hergestellt durch Emulsionspolymerisation.

a4.

Thermoplastisches Copolymerisat aus 20 Gew.-Teilen Methylmethacrylat, 50 Gew.-Teilen $\alpha$-Methylstyrol und 30 Gew.-Teilen Acrylnitril, mit einem L-Wert = 51, hergestellt durch Emulsionspolymerisation.

a5.

Thermoplastisches Copolymerisat aus 40 Gew.-Teilen Methylmethacrylat, 40 Gew.-Teilen $\alpha$-Methylstryol und 20 Gew.-Teilen Acrylnitril, mit einem L-Wert = 48, hergestellt durch Emulsionspolymerisation.

b1.

Statistisches Copolymerisat aus 88 Gew.-Teilen Styrol und 12 Gew.-Teilen Maleinsäureanhydrid, mit einem $\overline{M}w$ = 190 kg/mol und einem $\overline{M}w$ = 82 kg/mol, hergestellt durch Massepolymerisation.

b2.

Statistisches thermoplastisches Copolymerisat aus 83 Gew.-Teilen Styrol und 17 Gew.-Teilen Maleinsäureanhydrid, mit einem $\overline{M}w$ = 170 kg/mol und einem $\overline{M}n$ = 82 kg/mol, hergestellt durch Massepolymerisation.

b3.

Statistisches thermoplastisches Copolymerisat aus 80 Gew.-Teilen Styrol und 20 Gew.-Teilen Maleinsäureanhydrid, mit einem $\overline{M}w$ = 180 kg/mol und einem $\overline{M}n$ = 90 kg/mol, hergestellt durch Massepolymerisation.

Der L-Wert ist definiert als spezifisches Viskosität einer Polymerlösung in Dimethylformamid (gemessen bei 20° C) bei der Konzentration 5 g/l, dividiert durch diese Konzentration.

Gewichtsmittel $\overline{M}w$ und Zahlenmittel $\overline{M}n$ der Molekulargewichts wurden durch gelchromatographische Analyse der Copolymerisate auf der Grundlage einer Polystyrol-Eichbeziehung ermittelt.

Probenherstellung

Gießfolien:

Gießfolien wurden durch Lösen der Komponenten a und b im gewünschten Mischungsverhältnis in Methylenchlorid und durch Vergießen der Lösung, Abdampfen des Lösungsmittels bei Raumtemperatur und Nachtrocknen bei 50 bis 70° C bei leichtem Vakuum hergestellt.

Spritzgußteile:

Die Komponenten a und b wurden im gewünschten Mischungsverhältnis auf einem 1,3 l-Innenkneter bei einer Temperatur von 200 bis 220° C compoundiert. Die Spritzgußteile (ASTM-Stab 0.32cm (1/8")) wurden auf einer Spritzgußmaschine bei 260° C hergestellt.

Bestimmung der Glastemperatur:

Die Glastemperatur wurde mit einem Differentialkalorimeter, DSC-2 (Perkin-Elmer) bestimmt. Jede Probe wurde hierbei unter Stickstoff als Schutzgas zweimal von +10° C bis +200° C mit einer Heizrate von 20 K/min aufgeheizt. Nach der ersten Aufheizung wurde die Probe im Kalorimeter mit 320 K/min auf 10° C

3

abgekühlt, Gemessen wurde bei der zweiten Aufheizung.

Zur Bestimmung des Glaspunktes durch Schubmodulmessung wurde ein Rheometric Dynamic Spektrometer (Meßfrequenz 1 Hz), RDS 7700 der Firma Rheometrie verwendet. Gemessen wurde an den Spritzgußteilen im Ausgangszustand.

Bestimmung der Wärmeformbeständigkeit:

Die Wärmeformbeständigkeit nach Vicat (Methode B) wurde gemäß DIN 53 460 bestimmt.

In den nachfolgenden Tabellen sind die Zusammensetzungen der Mischungen und die Meßergebnisse aufgeführt.

4

## Tabelle 1

| Komponenten | | | | | | |
|---|---|---|---|---|---|---|
| a1 Gew.-Teile | b1 Gew.-Teile | b2 Gew.-Teile | b3 Gew.-Teile | Glastemperatur (DSC) ($^{0}$C) | Glastemperatur (Schubmodul) ($^{0}$C) | Vicat B/120 (DIN 53 460) ($^{0}$C) |
| 100 | – | – | – | 112 | 118 | 117 |
| 90 | 10 | – | – | 112 | 119 | 117 |
| 70 | 30 | – | – | 122 | 120 | 120 |
| 50 | 50 | – | – | 125 | 123 | 120 |
| 30 | 70 | – | – | 126 | 125 | 126 |
| 10 | 90 | – | – | 127 | 128 | 126 |
| – | 100 | – | – | 128,5 | 128 | 128 |
| 90 | – | 10 | – | 118 | 120 | 118 |
| 70 | – | 30 | – | 122 | 124 | 123 |
| 50 | – | 50 | – | 129 | 129 | 128 |
| 30 | – | 70 | – | 133 | 133 | 130 |
| 10 | – | 90 | – | 135,5 | 135 | 134 |
| – | – | 100 | – | 137,5 | 138 | 135 |

EP 0 271 766 B1

Tabelle 1 (Fortsetzung)

Komponenten

| a1 Gew.- Teile | b1 Gew.- Teile | b2 Gew.- Teile | b3 Gew.- Teile | Glastemperatur (DSC) (°C) | Glastemperatur (Schubmodul) (°C) | Vicat B/120 (DIN 53 460) (°C) |
|---|---|---|---|---|---|---|
| 90 | - | - | 10 | 117,5 | - | - |
| 80 | - | - | 20 | - | 123 | 118 |
| 70 | - | - | 30 | 119,5 | - | - |
| 60 | - | - | 40 | - | 129 | 126 |
| 50 | - | - | 50 | 122,5 | - | - |
| 40 | - | - | 60 | - | 133 | 131 |
| 30 | - | - | 70 | 132 | - | - |
| 20 | - | - | 80 | - | 138 | 135 |
| 10 | - | - | 90 | 137 | - | - |
| - | - | - | 100 | 141,5 | 141 | 139 |

EP 0 271 766 B1

Tabelle 2

| Komponenten | | | | Glastemperatur (DSC) (°C) |
|---|---|---|---|---|
| a2 Gew.-Teile | b1 Gew.-Teile | b2 Gew.-Teile | b3 Gew.-Teile | |
| 100 | - | - | - | 97/- |
| 75 | 25 | - | - | 101/115 |
| 50 | 50 | - | - | 105/121 |
| 25 | 75 | - | - | 110/126 |
| - | 100 | - | - | -/128 |
| 75 | - | 25 | - | 104/122 |
| 50 | - | 50 | - | 108/129 |
| 25 | - | 75 | - | 113/133 |
| - | - | 100 | - | -/137 |
| 75 | - | - | 25 | 101/122 |
| 50 | - | - | 50 | 110/132 |
| 25 | - | - | 75 | -/134 |
| - | - | - | 100 | -/140 |

Tabelle 3

| Komponenten | | | | Glastemperatur (DSC) (°C) |
|---|---|---|---|---|
| a3 Gew.-Teile | b1 Gew.-Teile | b2 Gew.-Teile | b3 Gew.-Teile | |
| 100 | - | - | - | 106/- |
| 75 | 25 | - | - | 110/115 |
| 50 | 50 | - | - | 114/122 |
| 25 | 75 | - | - | 116/125 |
| - | 100 | - | - | -/128 |
| 75 | - | 25 | - | 111/125 |
| 50 | - | 50 | - | 113/130 |
| 25 | - | 75 | - | 121/132 |
| - | - | 100 | - | -/137 |
| 75 | - | - | 25 | 112/129 |
| 50 | - | - | 50 | 115/133 |
| 25 | - | - | 75 | 123/136 |
| - | - | - | 100 | -/140 |

Tabelle 4

| Komponenten | | | Glastemperatur (DSC) (°C) |
|---|---|---|---|
| a4 Gew.-Teile | a5 Gew.-Teile | b3 Gew.-Teile | |
| 100 | - | - | 105/- |
| 80 | - | 20 | 108/121,5 |
| 60 | - | 40 | 114/131,5 |
| 40 | - | 60 | 116/135 |
| 20 | - | 80 | 120/139 |
| - | - | 100 | -/140 |
| - | 100 | - | 108/- |
| - | 80 | 20 | 111/125 |
| - | 60 | 40 | 114/130 |
| - | 40 | 60 | 118,5/135 |
| - | 20 | 80 | 125/137 |

Tabelle 1 zeigt, daß Mischungen der erfindungsgemäßen Mischungen von Copolymerisaten a und b nur einen einzigen Glaspunkt besitzen.

Tabelle 2, 3 und 4 zeigen, daß Mischungen der Copolymerisate a und b mit einer von der Erfindung abweichenden Zusammensetzung zwei Glaspunkte besitzen.

**Patentansprüche**

1.  Thermoplastische Formmassen, enthaltend

    a.
    1-99 Gew.-Teile eines thermoplastischen Copolymerisats aus
    40-70 Gew.-Teilen Methylmethacrylat, 20-50 Gew.-Teilen α-Methylstyrol und 5-15 Gew.-Teilen Acrylnitril,
    b.
    1-99 Gew.-Teile eines statistischen, thermoplastischen Copolymerisats aus
    70-95 Gew.-Teilen Styrol und 5-30 Gew.-Teilen Maleinsäureanhydrid.

2.  Thermoplastische Formmasse gemäß Anspruch 1, worin

    a. 50-60 Gew.-Teile Methylmethacrylat, 30-40 Gew.-Teile α-Methylstyrol und 7-13 Gew.-Teile Acrylnitril einpolymerisiert enthält.

3.  Thermoplastische Formmasse gemäß Anspruch 1, worin

    a. 55,5 Gew.-Teile Methylmethacrylat, 34,5 Gew.-Teile α-Methylstyrol und 10 Gew.-Teile Acrylnitril einpolymerisiert enthält.

4.  Thermoplastische Formmasse gemäß den Ansprüchen 1 bis 3, worin

    b. 78-90 Gew.-Teile Styrol und 10-22 Gew.-Teile Maleinsäureanhydrid einpolymerisiert enthält.

5.  Verfahren zur Herstellung der Formmassen gemäß Anspruch 1, dadurch gekennzeichnet, daß man a. und b. in bekannten Weise vermischt und dann bei Temperaturen von 200°C-300°C in gebräuchlichen Aggregaten schmelzcompoundiert oder schmelzextrudiert.

**Claims**

1.  Thermoplastic moulding compounds containing

    a.

1 to 99 parts by weight of a thermoplastic copolymer of
40 to 70 parts by weight methyl methacrylate, 20 to 50 parts by weight α-methyl styrene and 5 to 15 parts by weight acrylonitrile,

b.

1 to 99 parts by weight of a statistical thermoplastic copolymer of
70 to 95 parts by weight styrene and 5 to 30 parts by weight maleic anhydride.

2. Thermoplastic moulding compounds as claimed in claim 1, in which

    a. contains 50 to 60 parts by weight methyl methacrylate, 30 to 40 parts by weight α-methyl styrene and 7 to 13 parts by weight acrylonitrile in copolymerized form.

3. Thermoplastic moulding compounds as claimed in claim 1, in which

    a. contains 55.5 parts by weight methyl methacrylate, 34.5 parts by weight α-methyl styrene and 10 parts by weight acrylonitrile in copolymerized form.

4. Thermoplastic moulding compounds as claimed in claims 1 to 3, in which

    b. contains 78 to 90 parts by weight styrene and 10 to 22 parts by weight maleic anhydride in copolymerized form.

5. A process for the production of the moulding compounds claimed in claim 1, characterized in that a. and b. are mixed in known manner and the resulting mixture is melt-compounded or melt-extruded in standard units at temperatures of 200 to 300°C.

**Revendications**

1. Matières à mouler thermoplastiques, contenant
    a.
1 à 99 parties en poids d'un copolymérisat thermoplastique formé de
40 à 70 parties en poids de méthacrylate de méthyle, 20 à 50 parties en poids d'α-méthylstyrène et 5 à 15 parties en poids d'acrylonitrile,
    b.
1 à 99 parties en poids d'un copolymérisat thermoplastique statistique formé de
70 à 95 parties en poids de styrène et 5 à 30 parties en poids d'anhydride d'acide maléique.

2. Matière à mouler thermoplastique suivant la revendication 1, dans laquelle sont contenues, incorporées par polymérisation,
    a. 50 à 60 parties en poids de méthacrylate de méthyle, 30 à 40 parties en poids d'α-méthylstyrène et 7 à 13 parties en poids d'acrylonitrile.

3. Matière à mouler thermoplastique suivant la revendication 1, dans laquelle sont contenues, incorporées par polymérisation,
    a. 55,5 parties en poids de méthacrylate de méthyle, 34,5 parties en poids d'α-méthylstyrène et 10 parties en poids d'acrylonitrile.

4. Matière à mouler thermoplastique suivant les revendications 1 à 3, dans laquelle sont incorporées par polymérisation
    b. 78 à 90 parties en poids de styrène et 10 à 22 parties en poids d'anhydride d'acide maléique.

5. Procédé de production des matières à mouler suivant la revendication 1, caractérisé en ce qu'on mélange a. et b. d'une manière connue, puis on effectue une formulation à l'état fondu ou une extrusion à l'état fondu dans des appareils classiques, à des températures de 200 à 300°C.